# EUROPÄISCHE PATENTANMELDUNG

(11) **EP 1 607 848 A2**
(43) Veröffentlichungstag der Anmeldung: **21.12.2005**
(21) Anmeldenummer: 05007698.3
(22) Anmeldetag: 08.04.2005
(51) Int. Cl.: G06F 3/033

(54) **Verfahren für Fahrzeuge zur Auswahl von Menüs und/oder Untermenüs und/oder Funktionen innerhalb einer vorgegebenen Menüstruktur**

(30) Priorität: 16.06.2004 DE 102004028786
(71) Anmelder: Bayerische Motoren Werke Aktiengesellschaft, 80809 München (DE)
(72) Erfinder: Künzner, Hermann, 85356 Freising (DE)

(57) **Zusammenfassung**

Bei einem Verfahren für Fahrzeuge zur Auswahl von Menüs und/oder Untermenüs und/oder Funktionen innerhalb einer vorgegebenen Menüstruktur, mit einem zugeordneten Auswahlelement, mit einer Bildschirmanzeige zur Anzeige von der jeweiligen Auswahl zugeordneten grafischen Informationen, und mit Bedienelementen, mit denen einzelne Funktionen unabhängig von der Menüstruktur aktiviert und/oder deaktiviert werden, wird bei Betätigen eines Bedienelements selbsttätig ein zugehöriges Menü und/oder Untermenü auf dem Bildschirm angezeigt.

## Beschreibung

Die Erfindung bezieht sich auf ein Verfahren für Fahrzeuge zur Auswahl von Menüs und/oder Untermenüs und/oder Funktionen innerhalb einer vorgegebenen Menüstruktur, mit einem zugeordneten Auswahlelement, mit einer Bildschirmanzeige zur Anzeige von der jeweiligen Auswahl zugeordneten grafischen Informationen, und mit Bedienelementen, mit denen einzelne Funktionen unabhängig von der Menüstruktur aktiviert und/oder deaktiviert werden.

Ein derartiges Verfahren ist aus der DE 38 36 555 A1 bekannt. Dabei wird mit dem Auswahlelement innerhalb der Menüstruktur navigiert.

Mit Hilfe der Bedienelemente lassen sich einzelne Funktionen unabhängig von der Menüstruktur aktivieren und/oder deaktivieren. Typisches Beispiel hierfür sind Radiogrundfunktionen wie Lautstärkeeinstellung oder Senderwahl oder aber Einstellmöglichkeiten für die verschiedenen Sitzkomponenten wie Neigung der Rückenlehne oder Längsstellung des Sitzes. Diesen Funktionen gemeinsam ist die Eigenschaft, dass über die Bedienelemente ein bequemer Direktzugriff möglich ist. Zusätzlich kann es möglich sein, über die Menüstruktur auf die einzelnen Funktionen zuzugreifen. Dieser Zugriff ist in der Regel und gerade für den unerfahrenen Benutzer umständlicher.

Der Erfindung liegt die Aufgabe zugrunde, ein Verfahren der eingangs genannten Art zu schaffen, bei dem gerade für den unerfahrenen Benutzer der Zugriff auf die Menüstruktur erleichtert wird.

Durch die Erfindung wird eine funktionale Verbindung zwischen den in der Menüstruktur enthaltenen Menüs, Untermenüs und Funktionen einerseits und den über die separaten Bedienelemente individuell ansprechbaren Funktionen geschaffen.

Betätigt der Benutzer eines der Bedienelemente, wird selbsttätig ein zugehöriges Menü und/oder Untermenü (i. f. Auswahlmenü genannt) auf dem Bildschirm angezeigt. An Hand einiger Beispiele soll die Erfindung näher erläutert werden.

### Beispiel 1:

Wird beispielsweise eine Sitzpositionsverstellung vorgenommen, erhält der Nutzer auf dem Bildschirm ein Auswahlmenü dargestellt, das sämtliche im Rahmen der Menüstruktur für die Fahrzeugkomponente "Sitz" möglichen Einstelländerungen anzeigt. Es kann sich dabei auch um die mit der tatsächlich durchgeführten Sitzverstellung vergleichbaren Verstellmöglichkeiten (für die Sitzhöhe, Längsstellung, Lehnenneigung etc.) handeln. Es können aber auch ergänzend oder alternativ Funktionen sein, wie beispielsweise die Sitzheizung oder die Verteilung der Heizenergie auf Sitzflächen- und Lehnenteil. Diese Funktionen können auch nur über die Menüstruktur steuerbar sein.

### Beispiel 2:

Die Radio-Lautstärke wird am Lautstärkeregler eingestellt. Auf dem Bildschirm erscheint ein Auswahlmenü, mit dem es möglich ist, die Klangeinstellungen der Audioanlage zu verändern. Beispielsweise ist es damit möglich, für die im Fond angeordneten Lautsprecher die Lautstärke gegenüber den vorderen Lautsprechern zu erhöhen (Fader). Dies kann mit Hilfe des Auswahlelements vorgenommen werden.

### Beispiel 3:

Ein Fahrer befindet sich allein in seinem Fahrzeug. Er möchte, dass die Klimaanlage, die von der vorhergehenden Fahrt noch auf allen 4 Sitzplätzen unterschiedlich eingestellt ist, einheitlich auf seine Bedürfnisse justiert wird. Wenn er die Temperatur für seinen Platz mit Hilfe des z. B. am Armaturenbrett angeordneten Temperatur- Bedienelement einstellt, erhält er das Auswahlmenü für die Einstellung der Klimaanlage auf dem Bildschirm. Mit Hilfe des Auswahlelements kann es dann den 1-Zonen-Modus, d. h. ein einheitliches Klima für den gesamten Innenraum, aktivieren.

### Beispiel 4:

Bei einer Fahrt auf der Autobahn zeigt sich, dass es angenehm wäre, wenn das Tippblinken immer drei Blinksignale auslösen würde "(Autobahnblinken"). Mit Hilfe des gleichzeitig mit dem oder im Anschluss an das Tippblinken auf dem Bildschirm wiedergegebenen entsprechenden Auswahlmenüs kann mit dem Auswahlelement die gewünschte Funktion eingestellt werden.

Das entsprechende Auswahlmenü kann selbsttätig oder willkürlich und gleichzeitig bei Betätigen des Bedienelements oder zeitverzögert demgegenüber auf dem Bildschirm wiedergegeben werden. Hierzu kann eine eigene Funktion innerhalb der Menüstruktur oder ein willkürlich betätigbares Bedienelement vorgesehen sein. Die Anzeige des zugehörigen Menüs kann wie angegeben bei vorab eingestellter Funktion und nachfolgendem Betätigen des Bedienelements oder aber für ein vorausgehend betätigtes Bedienelement bei nachfolgendem Aktivieren der Funktion erfolgen. Im ersteren Fall kann das mit dem Betätigen des Bedienelements verbundene Aktivieren der Bedien-Funktion auch unterbunden oder aber ungehindert durchgeführt werden.

Es ist auch möglich, das Auswahlmenü auf dem Bildschirm bei einer Betätigungsweise des Bedienelements anzuzeigen, die sich von der zum Aktivieren der dem Bedienelement eigentlich zugeordneten Funktion unterscheidet. Beispielsweise kann dies ein kurzzeitig aufeinanderfolgendes Zweifachbetätigen des Bedienelements analog dem "Doppelklicken" beim PC oder ein längeres Halten in der Schaltstellung sein.

Voraussetzung für die Realisierung der Erfindung ist die mittels der Fahrzeug-Bordelektronik gewonnene Kenntnis über die tatsächliche Betätigung der jeweiligen Bedienelemente. Da bei modernen Fahrzeugen Bussysteme zum Einsatz kommen, ist es ohne weiteres möglich, über den Telegrammverkehr die Betätigung von Bedienelemente zu erfassen und über eine geeignete Steuereinrichtung das zugehörige Auswahlmenü aufzurufen.

Ist zusätzlich noch ein Speicher vorhanden, in dem die mit den Bedienelementen zuletzt aktivierten und/oder deaktivierten Funktionen festgehalten werden, kann auch die Historie dieser Funktionen auf dem Bildschirm aufgelistet werden. Die Auswahl einer der Funktionen aus der Liste mit Hilfe des Auswahlelements führt bei entsprechender Programmierung dazu, das zugehörige Auswahlmenü aufzurufen und die Möglichkeit zu eröffnen, darin enthaltene Funktionen zu verändern.

Eine weitere Verbesserung der Erfindung hat zum Ziel, das Nutzerverständnis zu fördern. Es ist hierzu möglich, an Stelle des Direktaufrufs des Auswahlmenüs einen alphabetischen Index auf dem Bildschirm anzuzeigen und darin den Anfangsbuchstaben des jeweiligen Auswahlmenüs optisch zu markieren. Wird dieser Buchstabe dann mit Hilfe des Auswahlelements ausgewählt, erscheint das Auswahlmenü zusammen mit dem Namen, dessen erster Buchstabe wie beschrieben markiert war. Dadurch wird der Nutzer schrittweise an die erfindungsgemäße Funktionalität herangeführt. Beim erstmaligen Gebrauch wird er nur einen Index vermuten, bei mehrmaliger Nutzung aber die volle Funktionalität erkennen.

## Patentansprüche

1. Verfahren für Fahrzeuge zur Auswahl von Menüs und/oder Untermenüs und/oder Funktionen innerhalb einer vorgegebenen Menüstruktur, mit einem zugeordneten Auswahlelement, mit einer Bildschirmanzeige zur Anzeige von der jeweiligen Auswahl zugeordneten grafischen Informationen, und mit Bedienelementen, mit denen einzelne Funktionen unabhängig von der Menüstruktur aktiviert und/oder deaktiviert werden, **dadurch gekennzeichnet, dass** bei Betätigen eines Bedienelements selbsttätig ein zugehöriges Menü und/oder Untermenü auf dem Bildschirm angezeigt wird.

2. Verfahren nach Anspruch 1, **dadurch gekennzeichnet, dass** für die Anzeige des zugehörigen Menüs und/oder Untermenüs eine auswählbare Funktion innerhalb der Menüstruktur vorgesehen wird.

3. Verfahren nach Anspruch 1, **dadurch gekennzeichnet, dass** die Funktion zur Anzeige des zugehörigen Menüs und/oder Untermenüs mittels eines gesonderten Bedienelements ausgewählt wird.

4. Verfahren nach Anspruch 2 oder 3, **dadurch gekennzeichnet, dass** bei ausgewählter Funktion zur Anzeige des zugehörigen Menüs und/oder Untermenüs diese Anzeige erfolgt, wenn nachfolgend eines der Bedienelemente betätigt wird.

5. Verfahren nach Anspruch 2 oder 3, **dadurch gekennzeichnet, dass** bei Auswählen der Funktion zur Anzeige des zugehörigen Menüs und/oder Untermenüs diese Anzeige für das vorausgehend betätigte Bedienelement vorgenommen wird.

6. Verfahren nach Anspruch 1, **dadurch gekennzeichnet, dass** das zugehörige Menü und/oder Untermenü auf dem Bildschirm bei einer Betätigungsweise des Bedienelements angezeigt wird, die sich von der zum Aktivieren der dem Bedienelement eigentlich zugeordneten Funktion unterscheidet.

7. Verfahren nach einem der Ansprüche 1 bis 6, **gekennzeichnet durch** einen Speicher, in dem die mit den Bedienelementen zuletzt aktivierten und/oder deaktivierten Funktionen festgehalten und aus dem sie für eine auf dem Bildschirm dargestellte Auflistung entnommen werden.

8. Verfahren nach einem der Ansprüche 1 bis 7, **dadurch gekennzeichnet, dass** lediglich der Anfangsbuchstabe des zugehörigen Menüs und/oder Untermenüs auf dem Bildschirm optisch hervorgehoben innerhalb eines alphabetischen Indexes angezeigt wird.
